# FASCICULE DE BREVET EUROPEEN

(11) **EP 2 542 862 B1**
(45) Date de publication et mention de la délivrance du brevet: **19.09.2018**
(21) Numéro de dépôt: 11711646.7
(22) Date de dépôt: 25.02.2011
(51) Int. Cl.: G01C 21/36, G09B 29/00

(54) **SYSTÈME DE NAVIGATION ROUTIÈRE ET PROCÉDÉ D'ACTIVATION AUTOMATIQUE D'UNE APPLICATION DE NAVIGATION ROUTIÈRE**
STRASSENNNAVIGATIONSSYSTEM UND VERFAHREN ZUR AUTOMATISCHEN AKTIVIERUNG EINER STRASSENNAVIGATIONSANWENDUNG
ROAD NAVIGATION SYSTEM AND METHOD FOR THE AUTOMATIC ACTIVATION OF A ROAD NAVIGATION APPLICATION

(30) Priorité: 01.03.2010 FR 1051455
(43) Date de publication de la demande: 09.01.2013
(73) Titulaire: Michelin Travel Partner, 92100 Boulogne-Billancourt (FR)
(72) Inventeur: DUFAY, Pierre, F-78000 Versailles (FR); SABLAYROLLES, Philippe, F-75013 Paris (FR); KOROLEFF, Cécile, F-75015 Paris (FR); GUYOT-RENAUD, Nicolas, F-75007 Paris (FR)
(74) Mandataire: Bauvir, Jacques
(86) Numéro de dépôt international: PCT/IB2011/000434
(87) Numéro de publication internationale: WO 2011/107857

(56) Documents cités:
- EP-A1- 1 491 861
- FR-A1- 2 695 496
- JP-A- 2006 268 815
- US-A- 4 668 858
- US-A- 5 406 491
- US-A1- 2003 083 807

## Description

### DOMAINE TECHNIQUE DE L'INVENTION

L'invention concerne un système de navigation routière comportant au moins une carte routière pourvue d'une pluralité de tronçons routiers et d'indications de lieux, disposés de façon à recréer à une échelle donnée, une représentation cartographique d'une pluralité de zones géographiques données, et un terminal numérique, comportant au moins un micro-processeur, un écran de visualisation, un ensemble d'instructions ordonnées de façon à permettre la mise en oeuvre d'une application de navigation routière, et un module de lecture de code visuel.

L'invention concerne par ailleurs un procédé d'activation automatique d'une application de navigation routière correspondante.

### ETAT DE LA TECHNIQUE ANTERIEURE

On connaît des dispositifs et des procédés permettant de présenter à un usager de la route des informations relatives à la densité de la circulation. L'information est souvent présentée sous la forme de cartes routières avec une application sur les tronçons concernés de différentes couleurs, par exemple du vert, jaune et rouge, selon la densité de circulation des tronçons. De tels procédés, historiquement présentés sur des dispositifs très puissants tels que des ordinateurs reliés à des serveurs centralisés par des liaisons de type Internet, sont à présent disponibles sur des appareils plus légers, et facilement transportables, tels que des téléphones cellulaires, lecteurs multimédias, ou autres terminaux communicants, par téléphonie ou autre liaisons de préférence non filaires, par exemple de type Wifi, Wimax, etc.

Le lancement de telles applications implique de manière usuelle de longues étapes de sélections de menus, d'étapes de validations, souvent difficiles à effectuer rapidement en situation de mobilité. Ainsi, entre l'identification d'une application, son lancement, la sélection d'une ville, du mode d'affichage de façon à bien voir la carte, etc, il peut s'écouler de longues minutes, en particulier si un utilisateur est peu familier avec l'application et/ou avec son terminal.

**Par** ailleurs, une fois lancée, l'application numérique n'est pas forcément ajustée de façon optimale. L'utilisateur doit alors effectuer de nouvelles opérations de sélection de menus, parfois par tâtonnements, pour ajuster le type d'affichage.

Le document US 2003/083807 A1 décrit un système de navigation routière comportant:
- une carte routière imprimée comprenant une pluralité de codes visuels de lancement d'application géographique, chacun en relation avec une zone géographique donnée,
- un terminal numérique, comportant un micro-processeur, un module d'affichage, et un module de lecture de code visuel et permettant la mise en oeuvre d'une application de navigation routière, en communicant avec un serveur d'application de navigation routière activable à distance par le terminal,
- le terminal numérique comportant une application de lancement de l'application de navigation routière, les codes visuels des cartes routières permettant un accès d'une part à des identifiants de zone géographique et d'autre part à des données de lancement de l'application, ladite application de lancement permettant, après lecture d'un code visuel par le module de lecture du terminal, l'envoi des données correspondant à ce code à un serveur d'application et le lancement de l'application selon une configuration spécifique optimisant l'affichage de l'application sur le terminal numérique en fonction de la zone géographique donnée.

Le document EP 1 491 861 A1 décrit également un système de navigation et son procédé associé, permettant de lire des codes sur une carte imprimée et, en lançant une application de navigation via un serveur distant, d'afficher des informations de navigation associés à ces codes sur l'écran d'un terminal numérique.

D'autres documents, tels que US 5 406 491 A ou encore US 4 668 858 A utilisent des codes visuels sur une carte imprimée, lisibles par un terminal numérique, pour encoder aussi l'échelle de la carte elle-même.

Pour pallier ces différents inconvénients, l'invention prévoit différents moyens techniques.

### EXPOSE DE L'INVENTION

Tout d'abord, un premier objet de l'invention consiste à prévoir un dispositif ou système et un procédé permettant de faciliter la mise en route d'une application numérique géographique, surtout pour des situations de mobilité, et plus particulièrement lorsque l'utilisateur a besoin de données précises, faciles à interpréter, dans un délai court.

Un autre objet de l'invention consiste à prévoir un dispositif et un procédé permettant de lancer et d'utiliser une application numérique géographique en optimisant les caractéristiques et/ou paramètres de celle-ci.

Un autre objet de l'invention consiste à prévoir un dispositif et un procédé permettant d'automatiser, de fiabiliser et d'optimiser le lancement d'applications numériques géographiques.

Pour ce faire, l'invention prévoit tout d'abord un système de navigation routière comportant :
- au moins une carte routière comprenant une pluralité de tronçons routiers et d'indications de lieux, disposés de façon à recréer à une échelle donnée une représentation cartographique d'une pluralité de zones géographiques données, et une pluralité de codes visuels de lancement d'application numérique géographique, chacun en relation avec une zone géographique donnée ;
- au moins un terminal numérique, comportant au moins un micro-processeur, un écran de visualisation, un ensemble d'instructions ordonnées de façon à permettre la mise en oeuvre d'une application de navigation routière, un module de lecture de code visuel;
- au moins un serveur d'applications, susceptible d'opérer une application de navigation routière activable à distance par lesdits terminaux numériques ;
- dans lequel:
   - les terminaux numériques comportent une application de lancement de l'application de navigation routière prévue sur le serveur d'application ;
   - les codes visuels des cartes routières permettent un accès d'une part à des identifiants de zone géographique et d'autre part à des données de lancement de l'application ;
   - ladite application de lancement permet, après lecture d'un code visuel par un module de lecture d'un terminal numérique, l'envoi des données correspondant à ce code à un serveur d'application et le lancement de l'application selon un configuration spécifique optimisant l'affichage de l'application sur le terminal numérique en fonction de la zone géographique donnée.

Selon l'invention, les codes visuels comprennent des délimitations d'une zone géographique donnée et des données relatives à une échelle d'affichage de la zone donnée. Grâce à ces caractéristiques, il est possible de lancer une application avec un ajustement du niveau d'échelle et de la zone à afficher de façon à présenter un maximum de données pertinentes pour l'utilisateur.

Selon un autre mode de réalisation avantageux, au moins un des codes visuels de la carte comporte des données permettant d'effectuer une sélection d'une application numérique géographique.

Selon encore un autre mode de réalisation avantageux, sur la carte de l'ensemble, un code visuel associé à une zone est disposé à proximité immédiate de ladite zone.

Le module de lecture ou décodage de codes visuels comporte avantageusement un capteur ou cellule de lecture ainsi que les moyens électroniques et les instructions appropriées, en fonction des types de codes à reconnaître.

De manière avantageuse, le système comporte par ailleurs un serveur de reconnaissance de code disposant d'un processeur et d'instructions de décodage adaptées pour effectuer une reconnaissance des données du code visuel.

Selon une variante de mise en oeuvre, les codes sont des codes-barres.

Selon une autre variante de mise en oeuvre, les codes sont matriciels (à deux dimensions. Il peut s'agir par exemple de codes QR, de Flashcode, etc).

Selon un mode de réalisation avantageux, l'application de navigation est effectuée à l'aide de données fournies par au moins un serveur distant et les codes contiennent un lien (par exemple une adresse URL) vers une configuration spécifique de l'application permettant une optimisation de cette application en relation avec la zone donnée (par exemple, pour une application d'information trafic, une délimitation de la zone couverte et/ou une échelle permettant un affichage en adéquation avec la taille et définition du terminal).

Dans une variante, au moins un code contient un identifiant intermédiaire nécessitant un décodage par une application de décodage afin de fournir un identifiant compatible avec l'application de navigation prévue. Par exemple, au moins un code visuel contient un code intermédiaire nécessitant un décodage par le serveur de reconnaissance de code afin de fournir un identifiant compatible avec l'application de navigation prévue.

Selon une variante avantageuse, les identifiants comprennent des données relatives à la latitude et/ou la longitude d'un point associé au code concerné.

Selon un mode de réalisation avantageux, l'application de navigation routière est un procédé de visualisation sur le terminal numérique de l'état de la circulation sur au moins une portion des tronçons de la zone présentée après lancement de l'application.

De manière avantageuse, le serveur d'application comprend au moins un module d'information trafic.

L'invention prévoit par ailleurs une carte routière pour ensemble de navigation routière tel que préalablement décrit.

L'invention prévoit enfin un procédé d'activation automatique d'une application de navigation routière pour un système de navigation routière comprenant au moins une carte routière comprenant une pluralité de codes visuels chacun en relation avec une zone géographique donnée, au moins un terminal numérique comportant au moins un micro-processeur, un écran de visualisation et un module de lecture de code visuel (et intégrant selon le cas des moyens de communication à distance sans fil), et au moins un serveur d'applications susceptible d'opérer une application de navigation routière activable à distance par lesdits terminaux numériques ;
ledit procédé d'activation automatique comportant les étapes consistant à :
- recevoir, au moyen d'un terminal numérique les données d'un code visuel prévu sur une carte routière ;
- assurer la transmission, par le terminal, des données des codes visuels à un serveur d'application ;
- les données des codes visuels permettant au serveur d'application d'accéder d'une part à des identifiants de zone géographique et d'autre part à des données de lancement d'une application numérique géographique selon une configuration spécifique optimisant l'affichage de l'application sur le terminal numérique en fonction de la zone géographique donnée ;
- l'application numérique géographique fonctionnant à l'aide d'une représentation visuelle effectuée sur le terminal numérique d'une carte routière de la zone désignée par le code visuel.

Selon l'invention, les données du code visuel permettent une délimitation d'une zone géographique donnée (ville, agglomération, etc) et une échelle d'affichage de la zone donnée.

Selon un mode de réalisation préférentiel, l'application comprend au moins un module d'information trafic.

Dans une variante, au moins une partie des données pour la mise en oeuvre de l'application est fournie par un serveur distant (la liaison entre le serveur et le terminal utilisateur est assurée par un réseau tel que Internet) et l'identifiant est une adresse URL de l'application.

Selon une autre variante, l'identifiant (ou les données du code visuel) est codé et requiert un décodage par un module de décodage fourni par un serveur distant. Ceci permet de modifier en toute souplesse, sans contrainte, les données finales de l'identifiant, en outre, de modifier l'adresse URL, par exemple pour diriger vers une nouvelle application ou pour diriger vers une autre configuration de la même application. En outre, de manière avantageuse, les données décodées sont envoyées vers le terminal afin de lancer l'application numérique géographique. Dans une variante, les données décodées sont envoyées vers le serveur d'application concerné.

Selon encore une autre variante, le terminal comporte ou est susceptible d'être relié à un moyen susceptible de permettre la lecture d'un code visuel tel qu'un code-barres ou un code matriciel (tel qu'un capteur spécifique ou un appareil photo), une application numérique (ou une suite d'instructions de commande) permettant de détecter les données, tel qu'un identifiant, contenues dans le code visuel. Dans un exemple avantageux, l'image du code visuel est directement transmise à un serveur de reconnaissance de code visuel pour décodage.

Selon encore une autre variante, l'application numérique géographique comporte des données d'information trafic, et/ou de météo, et/ou de points d'intérêts.

### DESCRIPTION DES FIGURES

Tous les détails de réalisation sont donnés dans la description qui suit, complétée par les figures 1 à 15, présentées uniquement à des fins d'exemples non limitatifs, et dans lesquelles:
- la figure 1 représente de façon schématique un système de navigation routière selon l'invention;
- la figure 2 est un exemple d'une carte d'un tel système selon l'invention;
- les figures 3 montre la carte de la figure 2 à une échelle permettant de mieux visualiser un code visuel;
- les figures 4 et 5 montrent les étapes de lancement d'une application de type information trafic à l'aide d'un système de navigation selon l'invention ;
- la figure 6 montre de façon schématique les différents éléments impliqués pour la mise en oeuvre du procédé d'activation automatique d'une application de navigation routière selon l'invention ;
- la figure 7 montre une variante des éléments de la figure 6 pour la mise en oeuvre d'une variante du procédé selon l'invention;
- la figure 8 montre des exemples de données contenues dans des codes visuels prévus selon l'invention ;
- la figure 9 présente un organigramme fonctionnel illustrant les principales étapes du procédé selon l'invention ;
- les figures 10 et 11 sont des organigrammes fonctionnels présentant des variantes du procédé illustré à la figure 9 ;
- la figure 12 est une représentation schématique d'un terminal numérique utilisé avec un système de navigation routière selon l'invention ;
- la figure 13 illustre un autre exemple d'application géographique numérique avec des données météorologiques ;
- les figures 14 et 15 illustrent d'autres exemples d'applications géographiques numériques avec des données correspondant à des points d'intérêts.

### DESCRIPTION DETAILLEE DE L'INVENTION

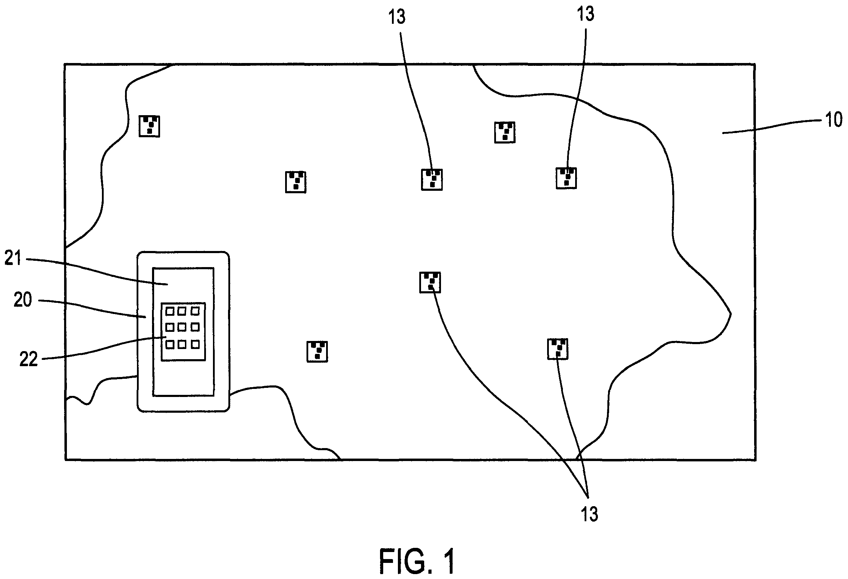

La figure 1 illustre de façon schématique un système 1 de navigation routière selon l'invention, comprenant d'une part une carte 10, telle qu'une carte routière, touristique ou géographique, comportant, en plus des données habituelles telles que les désignations de lieux, et des routes (au moins principales, en fonction de l'échelle de la carte), une pluralité de codes visuels 13 de lancement d'application numérique géographique, agencés sur la carte de façon à se trouver le plus près possible des lieux auxquels les codes seront associés ou liés. Les emplacements des codes près des lieux correspondants sont par ailleurs établis de façon à masquer le moins possible de données et/ou informations présentées sur la carte. Ces emplacements correspondent par exemple à des zones moins habitées, ou des zones de montagnes ou recouvertes par une surface d'eau.

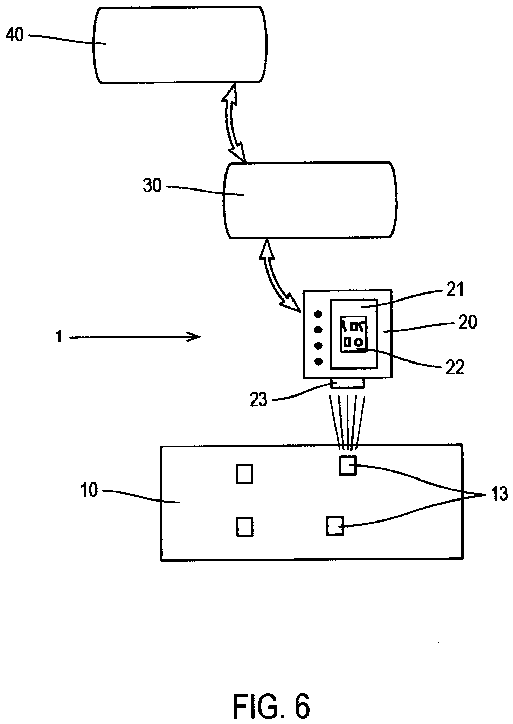

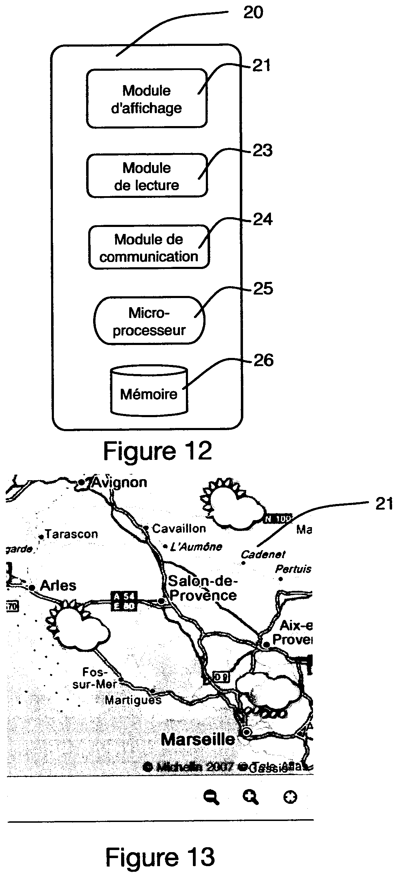

Un terminal numérique 20 (montré schématiquement à la figure 12) muni ou connectable à un module d'affichage 21 tel qu'un écran de visualisation est également prévu dans ledit ensemble de navigation. Le terminal comprend en outre un module de lecture de codes visuels (item 23 aux figures 6 et 12) permettant de lire, ou scanner, ou photographier les codes 13 d'une carte 10. Dans les exemples de mise en oeuvre des figures 1, 4, 6 et 7, le terminal présente le code en cours de lecture 22 à l'écran 21, pour faciliter l'opération de détection et lecture du code souhaité par l'utilisateur. Le terminal numérique est avantageusement un téléphone de type « Smartphone », avec un module de communication ou d'échange de données 24 (par exemple un module de téléphonie cellulaire), et un module numérique permettant de traiter des instructions de mise en oeuvre et des données, comme par exemple un microprocesseur 25 et une mémoire 26. Le terminal peut aussi être un ordinateur portable ou de type tablette, ou autre.

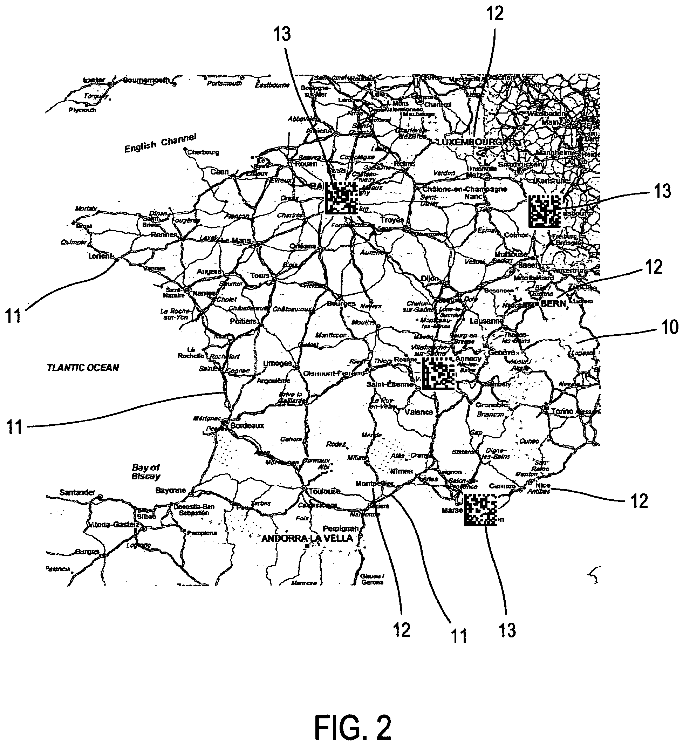

**La** figure 2 illustre un exemple plus détaillé d'une carte 10 conformément à un système de navigation 1 selon l'invention. Dans cet exemple illustrant la France, les tronçons 11 correspondants aux axes routiers principaux et les noms ou désignations 12 des villes sont indiqués. Des codes visuels 13 sont également disposés en correspondance avec les villes de Paris, Lyon, Marseille et Strasbourg.

Les codes visuels 13 peuvent être de différents types, selon les variantes prévues, et en particulier en fonction du type et/ou de la quantité de données à intégrer au code. Selon un exemple avantageux, on utilise un code selon la norme européenne ISO 16022. Ce type de code est avantageusement de petite dimension, tout en offrant de vastes possibilités d'intégrations de données. Selon une autre variante, on utilise des codes de type QR Code, norme très largement utilisée au Japon. Lorsque le système de navigation routière propose plusieurs applications numériques géographiques, au moins un des codes visuels 13 de la carte 10 comporte des données permettant d'effectuer une sélection d'une application numérique géographique. A titre d'exemple, les applications peuvent concerner l'information trafic, la météo, les points d'intérêts, les services liés au déplacement, etc.

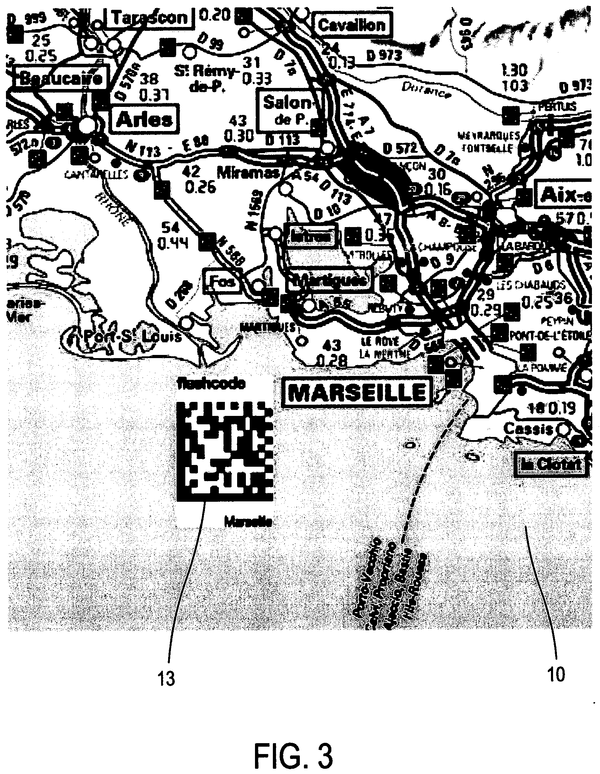

**La** figure 3 montre une carte 10 à une échelle permettant de mieux visualiser la région de Marseille, à laquelle un code visuel 13 est associé. Dans cette région, le code visuel est avantageusement positionné de façon à recouvrir la mer avoisinante, évitant ainsi de cacher des informations utiles des zones habitées.

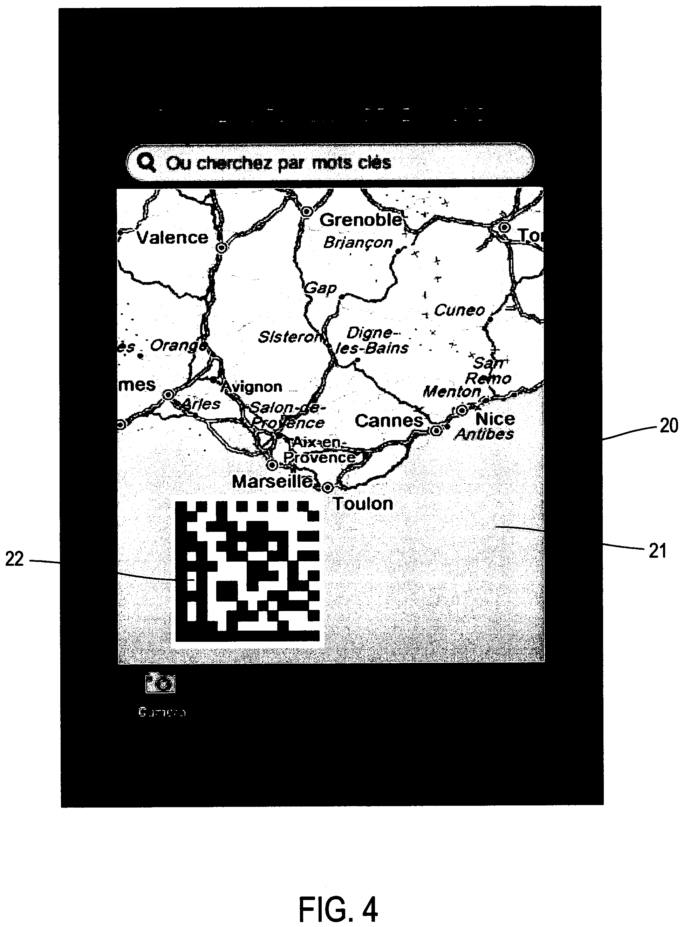

La figure 4 représente schématiquement un terminal numérique 20 lors d'une phase de lecture ou saisie ou détection ou reconnaissance d'un code visuel. Dans cet exemple, le terminal est muni d'un appareil photographique permettant de capturer une ou plusieurs images de la zone où le code à lire se situe. Pour faciliter l'opération, l'écran 21 affiche l'image capturée, sur laquelle on aperçoit le code visuel 22 tel que capté par le terminal.

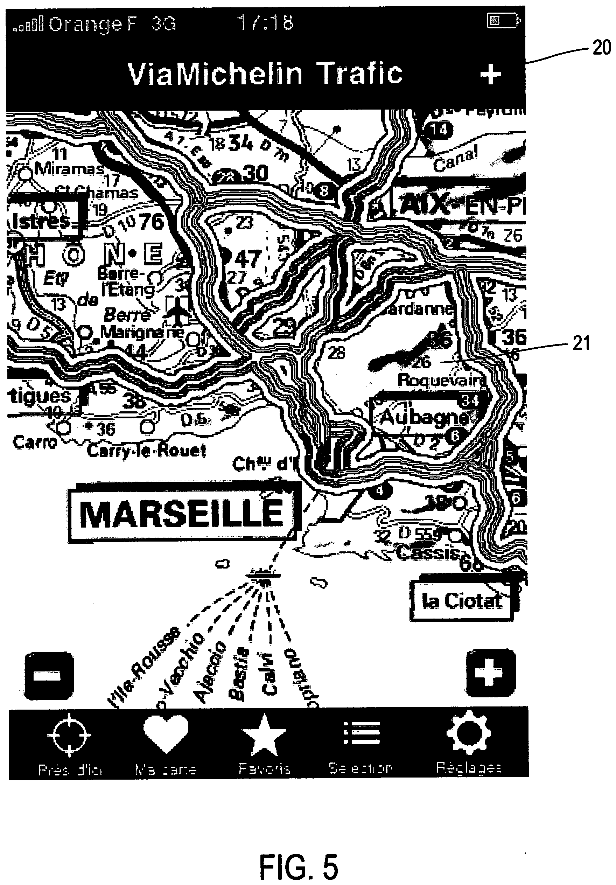

Lorsque le code concerné est bien lu par le capteur du terminal, une opération de décodage est automatiquement lancée, afin de déchiffrer les données contenues dans le code. Dans cet exemple, les données du code 13 disposé à proximité de Marseille contiennent un identifiant correspondant à ce lieu et éventuellement une désignation de l'application à lancer par le terminal. Ainsi, tel que montré à la figure 5, après reconnaissance de l'identifiant, le terminal 20 est en mesure de lancer une application, dans ce cas, de visualisation des conditions de circulation, communément désignée «information trafic». Dans ce type d'application, les principaux tronçons de la zone sont colorés selon des codes permettant à l'utilisateur de déceler rapidement les secteurs à éviter ou contourner. Par exemple, les tronçons sont colorés en vert en cas de circulation fluide, en jaune en cas de ralentissement, et en rouge pour les tronçons où on retrouve des congestions.

Selon l'invention, les données comprises dans les codes visuels comprennent au moins un identifiant du lieu associé au code, et une donnée correspondant à une échelle cartographique à utiliser par l'application pour représenter la zone de façon optimale au moins lors de la phase lancement. Les données peuvent comprendre également un identifiant d'une application numérique géographique, comme par exemple l'information trafic, affichage de points d'intérêt, météo, etc.

La figure 6 montre schématiquement les différents éléments d'un système de navigation 1 conforme à l'invention, et un exemple de mise en oeuvre du procédé d'activation automatique d'une application numérique géographique selon l'invention. Un terminal 20 pourvu de moyens de lecture ou capteur 23 de codes visuels 13 est placé par un utilisateur à proximité de la zone de la carte 10 où le code concerné se trouve. Avant décodage, le code est avantageusement présenté à l'écran 21 du terminal pour faciliter l'orientation de ce dernier de façon à bien positionner le capteur 23 pour une lecture du code en entier. Lorsque le code est déchiffré et l'identifiant du lieu fourni, cet identifiant est envoyé à un serveur utilisateur 30, comme par exemple un serveur Internet ou autre type de réseau, filaire ou hertzien, qui l'envoie à un serveur d'application 40, fournissant au moins une partie des données de l'application mise en oeuvre par le terminal. Par exemple, dans le cas d'une application d'information trafic, le terminal peut recevoir du serveur d'application 40 les données correspondant à la densité de la circulation sous forme de tronçons de différentes couleurs tel que préalablement décrit. Pour effectuer cette fonction, le serveur 40 dispose de toutes les données d'information trafic pour tous les tronçons susceptibles d'être demandés par un utilisateur.

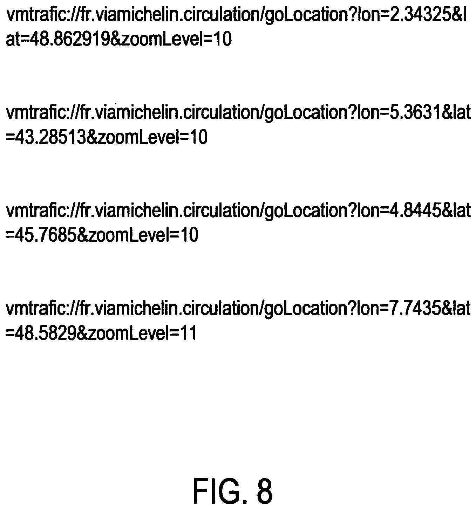

Lors du lancement de l'application, le serveur d'application 40 fournit avantageusement les données de façon à ce que l'application soit optimisée dès son lancement, de façon à supprimer les éventuelles étapes de réglage ou sélection de menu ou options par l'utilisateur. Pour ce faire, les données des codes visuels comprennent, en plus des identifiants de lieux, des données de lancement optimal d'application. La figure 8 donne un exemple de données comprises dans les codes visuels. Dans cet exemple, sous forme d'une adresse URL, on trouve la désignation de l'application (information trafic de ViaMichelin), les données de latitude et de longitude de la zone ou du point géographique associé au code visuel, à savoir les coordonnées des zones de Paris, Marseille, Lyon et Strasbourg ainsi que la taille d'affichage prévue pour chaque zone (« zoom level »). Grâce à des données aussi complètes, après décodage du code visuel, avec les données du serveur d'application 40, le terminal 20 lance l'application concernée, en présentant la zone associée au code, et avec une échelle optimisée. Avec un procédé automatisé de la sorte, l'utilisateur ne perd pas de temps à naviguer dans des menus pour y sélectionner les divers paramètres utiles au lancement, ce qui dans certains cas peut occasionner des manipulations relativement longues ou fastidieuses, et/ou répétitives si elles doivent être effectuées fréquemment.

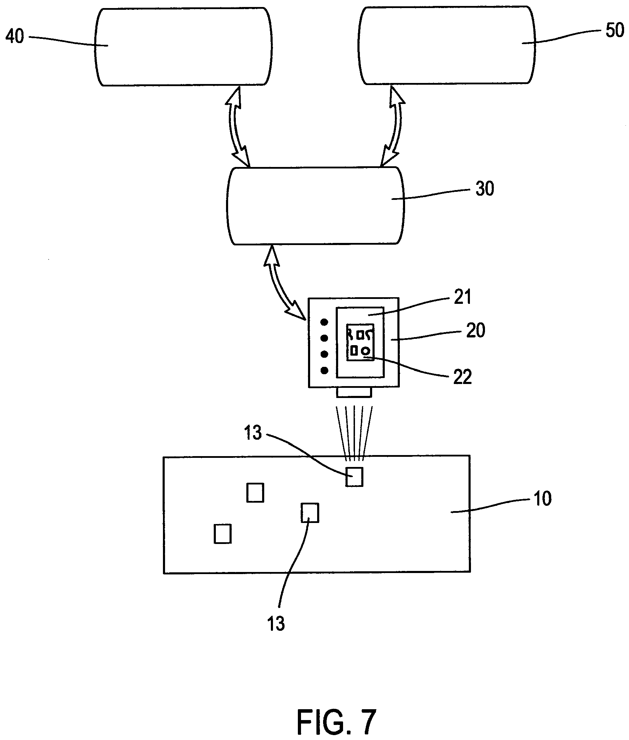

La figure 7 présente une variante du procédé dans laquelle un serveur 50 de reconnaissance de code est également prévu pour la mise en oeuvre. Ainsi, au lieu de prévoir un décodage du code visuel au niveau du terminal 20, à l'aide d'instructions de décodage prévues au niveau du terminal, l'image du code visuel est directement transmise au serveur de reconnaissance de code visuel 50. Ce serveur, qui dispose d'un processeur et des instructions de décodage adaptées, effectue l'étape de reconnaissance des données du code. Ces données sont ensuite envoyées soit vers le terminal 20, qui peut lancer l'application prévue, soit directement vers le serveur d'application 40 concerné. Cette variante permet de gérer les données associées au code de façon dynamique, puisqu'il est plus aisé de modifier les données sur un serveur que de procéder à des mises à jour de plusieurs centaines ou milliers de terminaux.

Selon une autre variante permettant aussi une gestion dynamique des données des codes visuels, les codes visuels 13 comprennent des codes intermédiaires, par exemple numériques ou alpha numériques, qui sont décodées au niveau du terminal 20 et envoyées à un serveur 50 de reconnaissance de code qui procède au décodage des codes intermédiaires. Dans un tel exemple de mise en oeuvre, les informations liées aux codes intermédiaires peuvent aisément être modifiées centralement, au niveau du serveur, plutôt qu'un niveau de chacun des terminaux 20.

Pour les deux variantes précédentes, le serveur 50 et le serveur 40 peuvent être combinés.

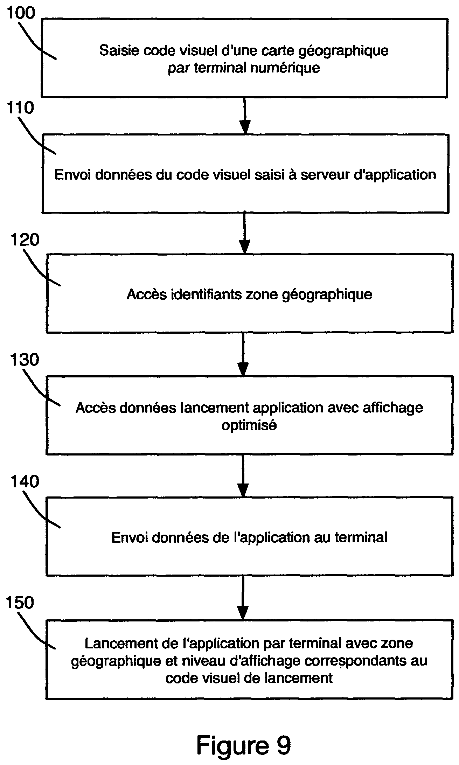

La figure 9 présente un organigramme fonctionnel avec les principales étapes du procédé selon l'invention. Ainsi, à l'étape 100, le terminal numérique 20 saisie un code visuel d'une carte géographique. Les données correspondantes sont envoyées à un serveur d'application 40 à l'étape 110, éventuellement par l'entremise d'un serveur utilisateur 30. Aux étapes 120 et 130, les données associées au code saisi sont obtenues. Il s'agit des données d'identifiant de zone géographique, et des données de lancement optimal de l'application, permettant de lancer l'application prévue avec une échelle d'affichage optimisée en fonction de la zone, de l'application et/ou éventuellement du type de terminal utilisé. A l'étape 140, les données de l'application lancée sont envoyées au terminal 20. Enfin, à l'étape 150, le terminal permet d'afficher le résultat de l'application, avec la zone géographique et le niveau ou échelle d'affichage correspondants au code visuel de lancement saisi à l'étape 100.

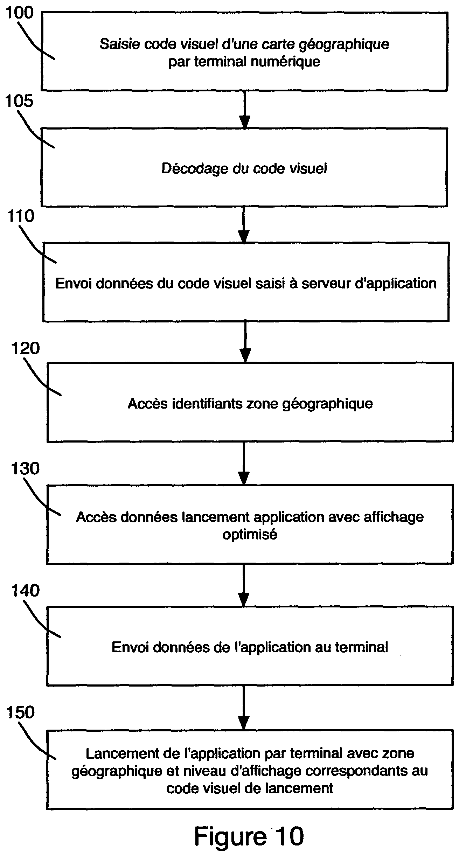

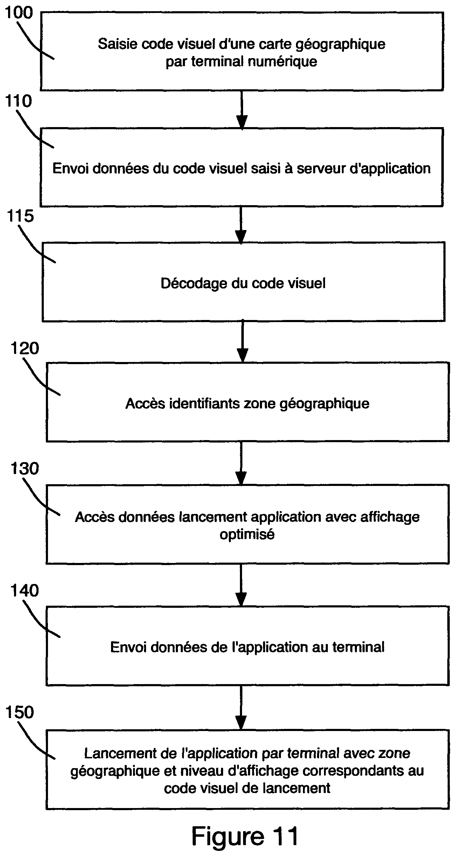

Selon diverses variantes de réalisation, le décodage du code visuel saisi à l'étape 100 peut être effectué soit directement au niveau du terminal 20, soit au niveau d'un des serveurs utilisés. Dans l'exemple de la figure 10, le décodage est effectué au niveau du terminal 20 à l'étape 105. Dans l'exemple de la figure 11, le décodage est effectué au niveau du serveur d'application à l'étape 115.

La figure 13 illustre un autre exemple d'application géographique numérique avec les données météorologiques correspondant à une zone d'intérêt.

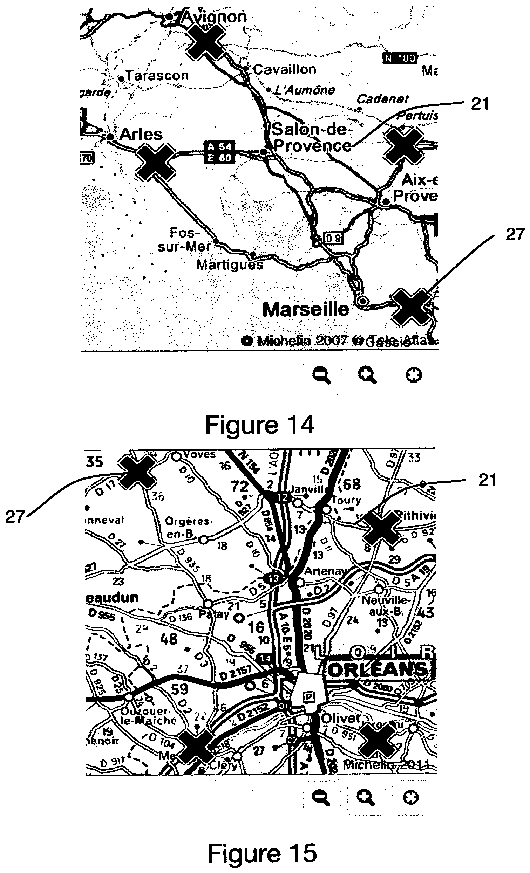

Les figures 14 et 15 illustrent d'autres exemples d'applications géographiques numériques avec des données correspondant à des points d'intérêts 27 (en anglais POI pour « Point of Interest »). Grâce au procédé selon l'invention, les points d'intérêts 27 pertinents à une zone donnée sont directement présentés, sans que l'utilisateur ait par exemple à effectuer des recherches afin de déterminer si d'autres points seraient à considérer dans un voisinage proche. Cette vision d'ensemble lui permet d'identifier le point le plus pertinent pour lui parmi ceux aisément accessibles. Le cas échéant, les données correspondant à un code visuel permettent en plus une délimitation et/ou un positionnement adaptés de la zone à afficher, afin de montrer certaines données situées à un endroit précis, qui ne seraient pas forcément présentées si la carte était par exemple centrée par défaut sur le centre-ville ou un point précis qui n'est pas en relation avec l'application concernée.

La mise en oeuvre des différents modules préalablement décrits (par exemple les modules 23, 24, 25) est avantageusement réalisée au moyen d'instructions de mise en oeuvre, permettant aux modules d'effectuer la ou les opérations spécifiquement prévues pour le module concerné. Les instructions peuvent être sous la forme d'un ou plusieurs logiciels ou modules de logiciels mis en oeuvre par un ou plusieurs microprocesseurs. Le ou les modules et/ou le ou les logiciels sont avantageusement prévus dans un produit programme d'ordinateur comprenant un support d'enregistrement ou medium d'enregistrement utilisable par un ordinateur et comportant un code programmé lisible par un ordinateur intégré dans ledit support ou médium, permettant à un logiciel applicatif son exécution sur un ordinateur, un serveur ou autre dispositif comportant un microprocesseur tel qu'un téléphone de type « smartphone », ou autre.

## Revendications

1. Système (1) de navigation routière comportant :
- au moins une carte routière (10) comprenant une pluralité de tronçons routiers (11) et d'indications de lieux (12), disposés de façon à recréer à une échelle donnée une représentation cartographique d'une pluralité de zones géographiques données et une pluralité de codes visuels (13) de lancement d'application numérique géographique, chacun en relation avec une zone géographique donnée ;
- au moins un terminal numérique (20), comportant au moins un micro-processeur (25), un module d'affichage (21), un ensemble d'instructions ordonnées de façon à permettre la mise en oeuvre d'une application de navigation routière, un module de lecture (23) de code visuel;
- au moins un serveur d'applications (40), susceptible d'opérer une application de navigation routière activable à distance par ledit au moins un terminal numérique (20) ;
- dans lequel : ledit au moins un terminal numérique (20) comporte une application de lancement de l'application de navigation routière prévue sur ledit au moins un serveur d'applications (40) ;
- les codes visuels (13) de ladite au moins une carte routière (10) permettent un accès d'une part à des identifiants de zone géographique et d'autre part à des données de lancement de l'application ;
- ladite application de lancement permet, après lecture d'un code visuel (13) par un module de lecture (23) dudit au moins un terminal numérique (20), l'envoi des données correspondant à ce code audit au moins un serveur d'applications (40) et le lancement de l'application selon une configuration spécifique optimisant l'affichage de l'application sur ledit au moins un terminal numérique (20) en fonction de la zone géographique donnée ;
- **caractérisé en ce que** les codes visuels (13) comprennent des délimitations d'une zone géographique donnée et des données relatives à une échelle d'affichage optimisée de la zone donnée.

2. Système (1) de navigation routière selon la revendication 1, comportant par ailleurs un serveur (50) de reconnaissance de code disposant d'un processeur et d'instructions de décodage adaptées pour effectuer une reconnaissance des données du code.

3. Système (1) de navigation routière selon l'une des revendications 1 ou 2, dans lequel au moins un des codes visuels (13) de ladite au moins une carte routière (10) comporte des données permettant d'effectuer une sélection d'une application numérique géographique.

4. Système (1) de navigation routière selon l'une des revendications précédentes, dans lequel les codes visuels (13) comprennent des données relatives à la latitude et/ou la longitude d'un point associé au code concerné.

5. Système (1) de navigation routière selon l'une des revendications précédentes, dans lequel l'application de navigation routière est un procédé de visualisation sur ledit au moins un terminal numérique (20) de l'état de la circulation sur au moins une portion des tronçons de la zone présentée après lancement de l'application.

6. Système (1) de navigation routière selon l'une des revendications précédentes, dans lequel ledit au moins un serveur d'applications (40) comprend au moins un module d'information trafic.

7. Carte routière pour système de navigation routière selon l'une des revendications 1 à 6, comportant une pluralité de codes visuels (13) de lancement d'application numérique géographique, permettant le lancement de l'application selon une configuration spécifique optimisant l'affichage de l'application sur au moins un terminal numérique en fonction d'une zone géographique donnée, **caractérisée en ce que** les codes visuels comprennent des délimitations de la zone géographique donnée et des données relatives à une échelle d'affichage optimisée de la zone donnée.

8. Procédé d'activation automatique d'une application de navigation routière pour un système de navigation routière comprenant au moins une carte routière (10) comprenant une pluralité de codes visuels (13) chacun en relation avec une zone géographique donnée, au moins un terminal numérique (20) comportant au moins un micro-processeur (25), un module d'affichage (21) et un module de lecture (23) de code visuel, et au moins un serveur d'applications (40) susceptible d'opérer une application de navigation routière activable à distance par lesdits terminaux numériques (20) ;
ledit procédé d'activation automatique comportant les étapes consistant à :
- recevoir, au moyen dudit au moins un terminal numérique (20) les données d'un code visuel (13) prévu sur ladite au moins une carte routière (10) ;
- assurer la transmission, par ledit au moins un terminal (20), des données des codes visuels (13) audit au moins un serveur d'applications (40) ; dans lequel les données des codes visuels permettent audit au moins un serveur d'applications (40) d'accéder d'une part à des identifiants de zone géographique et d'autre part à des données de lancement d'une application numérique géographique selon une configuration spécifique optimisant l'affichage de l'application sur ledit au moins un terminal numérique (20) en fonction de la zone géographique donnée ;
- **caractérisé en ce que** l'application numérique géographique fonctionne à l'aide d'une représentation visuelle effectuée sur ledit au moins un terminal numérique d'une carte routière de la zone désignée par le code visuel, les données du code visuel (13) permettant une délimitation d'une zone géographique donnée et une représentation à une échelle d'affichage optimisée de la zone donnée.

9. Procédé d'activation automatique selon la revendication 8, dans lequel l'image du code visuel (23) est directement transmise à un serveur de reconnaissance de code visuel (50) pour décodage.

10. Procédé d'activation automatique selon la revendication 9, dans lequel les données décodées sont envoyées vers ledit au moins un terminal (20), pour lancer l'application numérique géographique.

11. Procédé d'activation automatique selon l'une des revendications 8 à 10, dans lequel au moins un code visuel (13) de ladite au moins une carte routière (10) permet d'effectuer une sélection d'une application numérique géographique.

12. Procédé d'activation automatique selon l'une des revendications 8 à 11, dans lequel au moins une partie des données pour la mise en oeuvre de l'application est fournie par un serveur distant (30, 40, 50) et l'identifiant est une adresse URL de l'application.

13. Procédé d'activation automatique selon l'une des revendications 8 à 12, dans lequel l'application numérique géographique comporte des données d'information trafic, et/ou de météo, et/ou de points d'intérêts.

## Patentansprüche

1. Straßennavigationssystem (1), umfassend:
- mindestens eine Straßenkarte (10), die eine Mehrzahl von Straßenabschnitten (11) und Ortsangaben (12), die derart angeordnet sind, dass sie in einem gegebenen Maßstab eine kartografische Darstellung einer Mehrzahl von gegebenen geografischen Bereichen nachbilden, und eine Mehrzahl von visuellen Codes (13) zum Start einer geografischen digitalen Anwendung, die jeweils mit einem gegebenen geografischen Bereich in Beziehung stehen, umfasst;
- mindestens ein digitales Endgerät (20), das mindestens einen Mikroprozessor (25), ein Anzeigemodul (21), einen Satz geordneter Anweisungen, um die Umsetzung einer Straßennavigationsanwendung zu gestatten, ein Modul zum Lesen (23) von visuellem Code umfasst;
- mindestens einen Anwendungsserver (40), der geeignet ist, eine Straßennavigationsanwendung zu betreiben, die durch das mindestens eine digitale Endgerät (20) fernaktivierbar ist;
- wobei:
das mindestens eine digitale Endgerät (20) eine Startanwendung der Straßennavigationsanwendung aufweist, die auf dem mindestens einen Anwendungsserver (40) vorgesehen ist;
- die visuellen Codes (13) der mindestens einen Straßenkarte (10) einen Zugriff einerseits auf Kennungen eines geografischen Bereichs und andererseits auf Daten zum Start der Anwendung gestatten;
- die Startanwendung nach dem Einlesen eines visuellen Codes (13) durch ein Lesemodul (23) des mindestens einen digitalen Endgeräts (20) das Senden der Daten, die diesem Code entsprechen, an den mindestens einen Anwendungsserver (40) gestattet und der Start der Anwendung gemäß einer spezifischen Konfiguration die Anzeige der Anwendung auf dem mindestens einen digitalen Endgerät (20) in Abhängigkeit von dem gegebenen geografischen Bereich optimiert;
- **dadurch gekennzeichnet, dass** die visuellen Codes (13) Begrenzungen eines gegebenen geografischen Bereichs und Daten bezogen auf einen optimierten Anzeigemaßstab des gegebenen Bereichs umfassen.

2. Straßennavigationssystem (1) nach Anspruch 1, außerdem umfassend einen Server (50) zur Erkennung von Code, das über einen Prozessor und Anweisungen zur Dekodierung, die angepasst sind, eine Erkennung der Daten des Codes durchzuführen, verfügt.

3. Straßennavigationssystem (1) nach einem der Ansprüche 1 oder 2, wobei mindestens einer der visuellen Codes (13) der mindestens einen Straßenkarte (10) Daten umfasst, die es gestatten, eine Auswahl einer geografischen digitalen Anwendung durchzuführen.

4. Straßennavigationssystem (1) nach einem der vorhergehenden Ansprüche, wobei die visuellen Codes (13) Daten bezogen auf die Breite und/oder Länge eines Punkts, der mit dem betroffenen Code in Verbindung steht, umfassen.

5. Straßennavigationssystem (1) nach einem der vorhergehenden Ansprüche, wobei die Straßennavigationsanwendung ein Visualisierungsverfahren auf dem mindestens einen digitalen Endgerät (20) der Verkehrslage auf mindestens einem Teil der Abschnitte des Bereichs ist, der nach dem Start der Anwendung angezeigt wird.

6. Straßennavigationssystem (1) nach einem der vorhergehenden Ansprüche, wobei mindestens ein Anwendungsserver (40) mindestens ein Verkehrsinformationsmodul enthält.

7. Straßenkarte für ein Straßennavigationssystem nach einem der Ansprüche 1 bis 6, umfassend eine Mehrzahl von visuellen Codes (13) zum Start einer geografischen digitalen Anwendung, die den Start der Anwendung entsprechend einer spezifischen Konfiguration gestatten, die die Anzeige der Anwendung auf mindestens einem digitalen Endgerät in Abhängigkeit von einem gegebenen geografischen Bereich optimiert, **dadurch gekennzeichnet, dass** die visuellen Codes Begrenzungen des gegebenen geografischen Bereichs und Daten bezogen auf einen optimierten Anzeigemaßstab des gegebenen Bereichs umfassen.

8. Verfahren zur automatischen Aktivierung einer Straßennavigationsanwendung für ein Straßennavigationssystem umfassend mindestens eine Straßenkarte (10) umfassend eine Mehrzahl von visuellen Codes (13), die jeweils mit einem gegebenen geografischen Bereich in Beziehung stehen, mindestens ein digitales Endgerät (20), umfassend mindestens einen Mikroprozessor (25), ein Anzeigemodul (21) und ein Modul zum Lesen (23) von visuellem Code und mindestens einen Server von Anwendungen (40), der geeignet ist, eine Straßennavigationsanwendung zu betreiben, die durch die digitalen Endgeräte (20) fernaktivierbar ist; das Verfahren zur automatischen Aktivierung umfassend die Schritte, die aus Folgendem bestehen:
- Empfangen, mittels des mindestens einen digitalen Endgeräts (20) der Daten eines visuellen Codes (13), der auf der mindestens einen Straßenkarte (10) vorgesehen ist;
- Sicherstellen der Übertragung, durch das mindestens eine Endgerät (20), der Daten der visuellen Codes (13) an den mindestens einen Anwendungsserver (40);
wobei die Daten der visuellen Codes es dem mindestens einen Anwendungsserver (40) gestatten, einerseits auf Kennungen eines geografischen Bereichs und andererseits auf Daten zum Starten einer geografischen digitalen Anwendung entsprechend einer spezifischen Konfiguration zuzugreifen, die die Anzeige der Anwendung auf dem mindestens einem digitalen Endgerät (20) in Abhängigkeit von dem gegebenen geografischen Bereich optimiert;
- **dadurch gekennzeichnet, dass** die geografische digitale Anwendung mithilfe einer visuellen Darstellung funktioniert, die auf dem mindestens einen digitalen Endgerät einer Straßenkarte des Bereichs durchgeführt wird, der von dem visuellen Code bezeichnet wird, wobei die Daten des visuellen Codes (13) eine Begrenzung eines gegebenen geografischen Bereichs und eine Darstellung in einem optimierten Anzeigemaßstab des gegebenen Bereichs gestatten.

9. Verfahren zur automatischen Aktivierung nach Anspruch 8, wobei das Bild des visuellen Codes (23) direkt an einen Server zur Erkennung von visuellem Code (50) zur Dekodierung übertragen wird.

10. Verfahren zur automatischen Aktivierung nach Anspruch 9, wobei die dekodierten Daten zu dem mindestens einen Endgerät (20) gesendet werden, um die geografische digitale Anwendung zu starten.

11. Verfahren zur automatischen Aktivierung nach einem der Ansprüche 8 bis 10, wobei es mindestens ein visueller Code (13) der mindestens einen Straßenkarte (10) gestattet, eine Auswahl einer geografischen digitalen Anwendung durchzuführen.

12. Verfahren zur automatischen Aktivierung nach einem der Ansprüche 8 bis 11, wobei mindestens ein Teil der Daten für die Umsetzung der Anwendung von einem entfernten Server (30, 40, 50) geliefert wird und die Kennung eine URL-Adresse der Anwendung ist.

13. Verfahren zur automatischen Aktivierung nach einem der Ansprüche 8 bis 12, wobei die geografische digitale Anwendung Verkehrsinformationsdaten, und/oder Wetterdaten und/oder Daten zu Orten von Interesse umfasst.

## Claims

1. Road navigation system (1) comprising:
- at least one road map (10) comprising a plurality of road segments (11) and of indications of places (12), disposed in such a way as to recreate on a given scale a cartographic representation of a plurality of given geographical zones and a plurality of geographical digital application launching visual codes (13), each in conjunction with a given geographical zone;
- at least one digital terminal (20), comprising at least one micro-processor (25), a display module (21), a set of ordered instructions so as to allow the implementation of a road navigation application, a visual code reading module (23);
- at least one applications server (40), able to operate a road navigation application remotely activatable by said at least one digital terminal (20);
- in which:
said at least one digital terminal (20) comprises an application for launching the road navigation application provided on said at least one applications server (40);
- the visual codes (13) of said at least one road map (10) allowing access, on the one hand, to geographical zone identifiers and, on the other hand, to data for launching the application;
- said launching application allows, after reading of a visual code (13) by a reading module (23) of said at least one digital terminal (20), the dispatching of the data corresponding to this code to said at least one applications server (40) and the launching of the application according to a specific configuration optimizing the display of the application on said at least one digital terminal (20) as a function of the given geographical zone;
- **characterized in that** the visual codes (13) comprise delimitations of a given geographical zone and data relating to an optimized scale of display of the given zone.

2. Road navigation system (1) according to Claim 1, moreover comprising a code recognition server (50) having a processor and having decoding instructions adapted to perform a recognition of the data of the code.

3. Road navigation system (1) according to one of Claims 1 or 2, in which at least one of the visual codes (13) of said at least one road map (10) comprises data making it possible to perform a selection of a geographical digital application.

4. Road navigation system (1) according to one of the preceding claims, in which the visual codes (13) comprise data relating to the latitude and/or the longitude of a point associated with the code concerned.

5. Road navigation system (1) according to one of the preceding claims, in which the road navigation application is a method for viewing on said at least one digital terminal (20) the state of the traffic flow on at least one portion of the segments of the zone presented after launching the application.

6. Road navigation system (1) according to one of the preceding claims, in which said at least one applications server (40) comprises at least one traffic information module.

7. Road map for road navigation system according to one of Claims 1 to 6, comprising a plurality of geographical digital application launching visual codes (13), allowing the launching of the application according to a specific configuration optimizing the display of the application on at least one digital terminal as a function of a given geographical zone, **characterized in that** the visual codes comprise delimitations of the given geographical zone and data relating to an optimized scale of display of the given zone.

8. Method of automatic activation of a road navigation application for a road navigation system comprising at least one road map (10) comprising a plurality of visual codes (13) each in conjunction with a given geographical zone, at least one digital terminal (20) comprising at least one micro-processor (25), a display module (21) and a visual code reading module (23), and at least one applications server (40) able to operate a road navigation application remotely activatable by said digital terminals (20);
said method of automatic activation comprising the steps consisting in:
- receiving, by means of said at least one digital terminal (20), the data of a visual code (13) provided on said at least one road map (10);
- ensuring the transmission, by said at least one terminal (20), of the data of the visual codes (13) to said at least one applications server (40);
in which the data of the visual codes allow said at least one applications server (40)
to access, on the one hand, geographical zone identifiers and, on the other hand, data for launching a geographical digital application according to a specific configuration optimizing the display of the application on said at least one digital terminal (20) as a function of the given geographical zone;
- **characterized in that** the geographical digital application operates with the aid of a visual representation performed on said at least one digital terminal of a road map of the zone designated by the visual code, the data of the visual code (13) allowing a delimitation of a given geographical zone and a representation on an optimized scale of display of the given zone.

9. Method of automatic activation according to Claims 8, in which the image of the visual code (23) is transmitted directly to a visual code recognition server (50) for decoding.

10. Method of automatic activation according to Claim 9, in which the decoded data are dispatched to said at least one terminal (20), in order to launch the geographical digital application.

11. Method of automatic activation according to one of Claims 8 to 10, in which at least one visual code (13) of said at least one road map (10) makes it possible to perform a selection of a geographical digital application.

12. Method of automatic activation according to one of Claims 8 to 11, in which at least one part of the data for the implementation of the application is provided by a remote server (30, 40, 50) and the identifier is a URL address of the application.

13. Method of automatic activation according to one of Claims 8 to 12, in which the geographical digital application comprises data pertaining to traffic information, and/or weather, and/or points of interest.
